# FASCICULE DE BREVET EUROPEEN

(11) **EP 1 427 628 B1**
(45) Date de publication et mention de la délivrance du brevet: **05.10.2005**
(21) Numéro de dépôt: 02783139.5
(22) Date de dépôt: 03.09.2002
(51) Int. Cl.: B62D 57/00, B25J 9/16

(54) **VEHICULE A DEPLACEMENT PAR REPTATION PROPULSE CONJOINTEMENT PAR ONDULATIONS LONGITUDINALES ET LATERALES**
GEMEINSAM DURCH QUER- UND LÄNGSWELLENBEWEGUNG ANGETRIEBENES KRIECHFAHRZEUG
SNAKE VEHICLE POWERED JOINTLY BY LATERAL AND LONGITUDINAL UNDULATIONS

(30) Priorité: 07.09.2001 FR 0111615
(43) Date de publication de la demande: 16.06.2004
(73) Titulaire: TDA ARMEMENTS S.A.S., 75008 Paris (FR)
(72) Inventeur: GUYVARCH, Jean-Paul, Thales Intellectual Property, F-94117 Arcueil Cedex (FR)
(74) Mandataire: Lucas, Laurent Jacques
(86) Numéro de dépôt international: PCT/FR2002/003000
(87) Numéro de publication internationale: WO 2003/022666

(56) Documents cités:
- EP-A- 0 305 299
- WO-A-00/10073
- FR-A- 2 638 699
- FR-A- 2 741 584
- PATENT ABSTRACTS OF JAPAN vol. 1997, no. 10, 31 octobre 1997 (1997-10-31) & JP 09 168982 A (MITSUBISHI HEAVY IND LTD), 30 juin 1997 (1997-06-30)
- PAAP K L ET AL: "Motion control scheme for a snake-like robot" COMPUTATIONAL INTELLIGENCE IN ROBOTICS AND AUTOMATION, 1999. CIRA '99. PROCEEDINGS. 1999 IEEE INTERNATIONAL SYMPOSIUM ON MONTEREY, CA, USA 8-9 NOV. 1999, PISCATAWAY, NJ, USA,IEEE, US, 8 novembre 1999 (1999-11-08), pages 59-63, XP010365310 ISBN: 0-7803-5806-6
- POI G ET AL: "Traveling wave locomotion hyper-redundant mobile robot" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, 16 mai 1998 (1998-05-16), pages 418-423, XP010281011 ISBN: 0-7803-4300-X
- NILSSON M: "Cranking along: slip-free locomotion by snake robots without torsion-free joints" INTELLIGENT CONTROL (ISIC), 1998. HELD JOINTLY WITH IEEE INTERNATIONAL SYMPOSIUM ON COMPUTATIONAL INTELLIGENCE IN ROBOTICS AND AUTOMATION (CIRA), INTELLIGENT SYSTEMS AND SEMIOTICS (ISAS)., PROCEEDINGS OF THE 1998 IEEE INTERNATIONAL SYMPOSIUM ON GAITH, 14 septembre 1998 (1998-09-14), pages 239-242, XP010299184 ISBN: 0-7803-4423-5

## Description

La présente invention concerne les techniques relatives aux véhicules à déplacement par reptation qui sont constitués d'une série d'éléments articulés entre eux, auxquels on impose des ondulations latérales. Elle s'applique notamment au transport de charge sur tout types de terrains (durs, mous, accidentés, ...) de manière discrète (visuelle et acoustique).

On connaît déjà de tels véhicules (appelés robots serpents) propulsés par reptation. Un exemple, correspondant au préambule des revendications 1 et 6, est donné dans le brevet FR 2 741 584 de Jean-Paul GUYVARCH intitulé « Procédé de propulsion d'un véhicule par reptation et véhicule pour sa mise en oeuvre ». La technique de reptation qui y est présentée est exclusivement celle de l'ondulation latérale. Pour améliorer le fonctionnement sur sol dur, l'utilisation de roulettes est proposée. Un autre exemple connu de véhicule propulsé par ondulation latérale a été réalisé aux Etats-Unis par le Dr Gavin MILLER. Il est notamment présenté en démonstration sur un site internet. Ce véhicule est également équipé de roulettes ventrales. Les roulettes permettent d'augmenter l'efficacité de la propulsion sur sol dur. Cependant, sur sol mou (boue par exemple), dans de l'herbe ou dans des gravillons, celles-ci peuvent s'encrasser et se bloquer. Non seulement elles n'ajoutent plus de force de propulsion, mais en plus elles freinent le véhicule.

Par distinction avec cet état de la technique, la propulsion du véhicule suivant la présente invention est assurée conjointement par des ondulations latérales et par des ondulations longitudinales. Les ondulations latérales s'apparentent à la nage du poisson : les appuis latéraux (aspérités du terrain ou force hydrodynamique en milieu liquide) engendrent une force propulsive quand les mouvements sont coordonnés de telle façon que chaque élément cherche à recopier l'orientation de l'élément qui le précède (suivi d'un sillage). Les ondulations longitudinales consistent en une suite de mouvements qui se propagent régulièrement sur la surface ventrale du véhicule. La surface ventrale peut présenter une adhérence directive (glissant dans le sens de l'avancement, accrochant dans l'autre) de sorte à augmenter encore la force propulsive.

Par ses caractéristiques, telles qu'elles seront décrites et revendiquées ci-après, l'invention vise à augmenter la force de propulsion d'un véhicule à éléments successifs propulsé notamment par des ondulations latérales, et ce pour des véhicules destinés à se mouvoir sur tout type de terrain.

Pour satisfaire à cet objectif et obtenir d'autres avantages qui ressortiront plus loin, l'invention a pour objet un procédé de propulsion d'un véhicule à déplacement par reptation, essentiellement constitué par une série d'éléments articulés entre eux, dans lequel on impose à chaque élément une orientation variant au cours du temps de manière à suivre le trajet de l'élément précédent, de sorte à donner à l'ensemble du véhicule un trajet sinueux à ondulations latérales, caractérisé en ce qu'on impose aussi un mouvement d'ondulation longitudinale à la surface ventrale d'au moins un élément, de sorte à produire une force propulsive complémentaire de celle résultant du mouvement d'ondulation latérale.

Pour la mise en oeuvre du procédé ainsi défini, l'invention a également pour objet un véhicule à déplacement par reptation, essentiellement constitué par une série d'éléments articulés entre eux par des moyens d'articulation, qui se caractérise en ce qu'il comprend en outre :
(a)des premiers moyens de commande, agissant notamment sur les moyens d'articulation, tendant à imposer à chaque élément une orientation variant au cours du temps, cette orientation variant de manière à suivre le trajet de l'élément précédent, de sorte à donner à l'ensemble du véhicule un trajet sinueux à ondulations latérales ;
(b)des seconds moyens de commande, agissant notamment sur la surface ventrale d'au moins un élément, tendant à imposer à ladite surface un mouvement d'ondulation longitudinale, de sorte à produire une force propulsive complémentaire de celle résultant du mouvement d'ondulation latérale.

Dans le cadre d'un mode de réalisation avantageux, dans le but d'améliorer l'efficacité de propulsion, l'invention se traduit en terme de procédé par le fait que le mouvement d'ondulation longitudinale est imposé de sorte que la vitesse de propulsion résultant de ce mouvement soit en accord avec celle résultant du mouvement d'ondulation latérale. Elle se traduit alors en terme de dispositif par un véhicule dans lequel les seconds moyens de commande sont réglés de sorte que la vitesse de propulsion résultant du mouvement d'ondulation longitudinale soit en accord avec celle résultant du mouvement d'ondulation latérale.

Dans le cadre des modes de réalisation pratique de l'invention adaptée au monde industriel, l'invention se traduit en terme de procédé par le fait que le mouvement d'ondulation longitudinale est imposé par l'oscillation longitudinale de points de la surface ventrale, chaque point décrivant une courbe identique à son voisin mais décalée dans le temps. Elle se traduit alors en terme de dispositif par un véhicule dans lequel les seconds moyens de commande agissent sur la surface ventrale en imposant une oscillation longitudinale à des points de la surface ventrale, chaque point décrivant une courbe identique à son voisin mais décalée dans le temps.

Parallèlement, dans le cadre d'un mode de réalisation avantageux, le procédé se traduit par le fait que chaque point de la surface ventrale oscillant longitudinalement, on impose en outre un mouvement vertical de même période que les oscillations longitudinales, de sorte à lever ledit point lorsque celui-ci se déplace dans un sens non favorable à la propulsion, et de sorte à baisser ledit point lorsque celui-ci se déplace dans un sens favorable à la propulsion. En terme de dispositif, elle se traduit par un véhicule dans lequel les seconds moyens de commande agissent sur la surface ventrale en imposant en outre à chaque point de la surface ventrale un mouvement vertical de même période que les oscillations longitudinales, de sorte à lever ledit point lorsque celui-ci se déplace dans un sens non favorable à la propulsion, et de sorte à baisser ledit point lorsque celui-ci se déplace dans un sens favorable à la propulsion.

Selon un autre mode de réalisation avantageux, pouvant être mis en oeuvre indépendamment ou en combinaison des autres modes de réalisation avantageux, le procédé se traduit par le fait que lors du mouvement d'ondulation longitudinale, la surface ventrale d'au moins un élément adhère davantage dans le sens favorable au déplacement davantage que dans l'autre sens. L'invention se traduit alors en terme de procédé par un véhicule dans lequel au moins une surface ventrale animée d'un mouvement d'ondulation longitudinale présente une adhérence directive, supérieure dans le sens favorable au déplacement que dans l'autre sens.

L'invention a pour principaux avantages, qu'elle permet de réaliser un véhicule robuste, utilisant des technologies éprouvées et faibles en coût, compact (diamètre de 5 à 10 cm) tout en maintenant un volume de chargement utile à l'intérieur du véhicule (environ 50% du volume total), les mouvements d'ondulation étant de réglage simple, efficace, et produits avec un bon rendement.

L'invention sera maintenant décrite de manière plus détaillée dans le cadre d'un exemple particulier de réalisation pratique. Dans le cours de cette description, on fera référence aux figures des dessins annexés, parmi lesquelles :
- la figure 1, une vue de dessus, représente schématiquement un véhicule vu de dessus, ses éléments étant animés d'un mouvement d'ondulation latérale ;
- la figure 2, une vue de profil, représente schématiquement un élément du véhicule, la surface ventrale de cet élément étant animée d'un mouvement d'ondulation longitudinale ;
- la figure 3, une vue de dessus, représente schématiquement un dispositif mécanique à base d'engrenages d'un élément du véhicule, permettant d'obtenir un mouvement d'ondulation longitudinale ;
- la figure 4, une vue de profil, représente schématiquement le dispositif mécanique illustré sur la figure 3 ;
- la figure 5, une vue de derrière, représente schématiquement une partie du dispositif mécanique illustré sur la figure 3 ;
- la figure 6, une vue de derrière, représente schématiquement une variante de réalisation du dispositif illustré sur la figure 3 ;
- la figure 7, une vue de dessus, représente schématiquement un dispositif mécanique à base de biellettes d'un élément du véhicule, permettant d'obtenir un mouvement d'ondulation longitudinale;
- la figure 8, une vue de profil, représente schématiquement le dispositif mécanique illustré sur la figure 7 ;
- la figure 9, une vue de profil, représente un exemple de dispositif mécanique à base de jambes coulissantes ;
- la figure 10, graphique, représente les trajectoires de deux points d'une jambe coulissante ;
- la figure 11, une vue de profil, représente un détail de la surface ventrale d'un élément du véhicule ;
- les figures 12 à 15, des vues de profil, représentent des variantes de réalisation de la surface ventrale illustrée sur la figure 11.

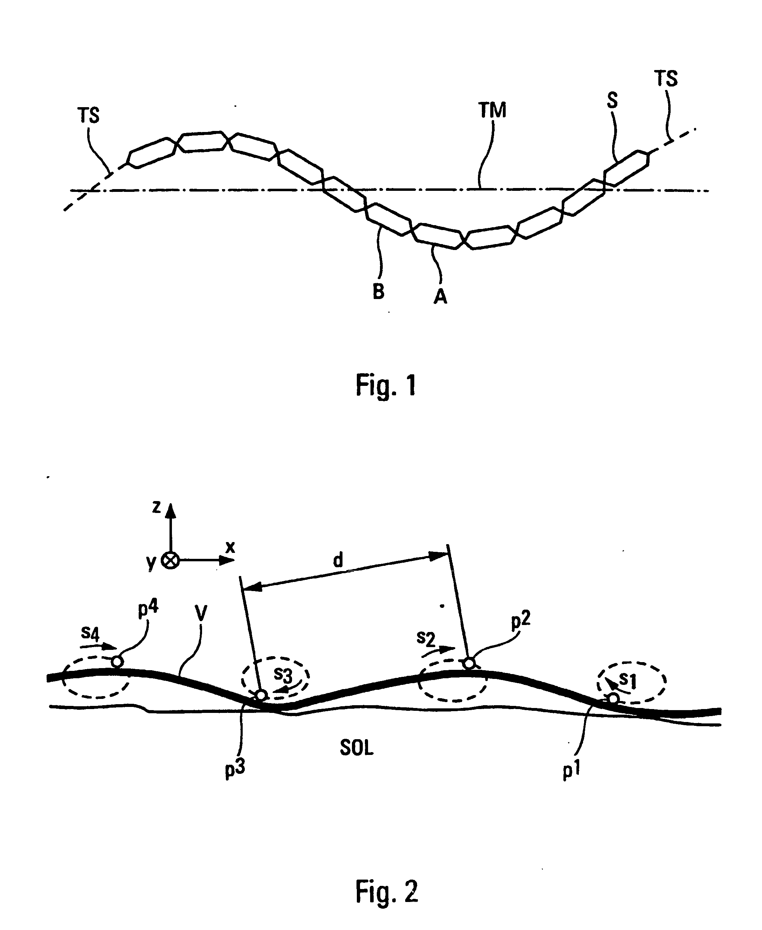

On se réfère maintenant à la figure 1. Le véhicule reprend le principe général décrit dans le brevet FR 2 741 584 auquel on pourra se reporter pour plus de détails sur la réalisation d'un dispositif d'ondulation latérale. Le véhicule est constitué d'une chaîne d'éléments articulés suivants deux axes (en gisement et en site). Ces éléments peuvent être tous identiques à l'exception des éléments de tête S et de queue. Le nombre d'éléments peut varier suivant les besoins d'un à plusieurs dizaines. La lonaueur des éléments peut être de l'ordre de 10 à 20 cm. En section, ils peuvent avoir une forme circulaire ou ovoïde, avec par exemple un diamètre de l'ordre de 5 à 10 cm.

Si l'on considère deux éléments successifs A et B, des moyens d'articulations les relient l'un à l'autre. La capacité d'articulation en gisement et en site de ces moyens d'articulation peut être de l'ordre de +/-25° ou plus. Cette capacité d'articulation correspond bien entendu à un angle (gisement ou site) entre deux éléments consécutifs.

Chaque élément est équipé de premiers moyens de commande qui agissent sur les moyens d'articulation. Les premiers moyens de commande peuvent être électro-mécanique par exemple. Des accumulateurs électriques, tels que des batteries rechargeables Nimh, peuvent les alimenter électriquement. Les premiers moyens de commande permettent d'imposer à chaque élément, tel que l'élément B, une orientation variant au cours du temps de manière à suivre le trajet de l'élément précédent A, de sorte à donner à l'ensemble du véhicule un trajet TS sinueux à ondulations latérales de part et d'autre d'une trajectoire moyenne TM à suivre.

Le véhicule peut être également équipé d'un micro-contrôleur, pour assurer la coordination mécanique de l'ensemble des éléments en fonction d'ordres de pilotage. Ces ordres de pilotage peuvent être reçus par télécommande (liaison radio par exemple). Il peut être également équipé de capteurs, et en particulier d'une caméra qui permet de transmettre des images à l'opérateur pilotant le véhicule.

Le principe général de pilotage du véhicule peut être celui décrit dans le brevet FR 2 741 584 auquel on pourra se reporter pour plus de détails.

L'ajout d'une propulsion par ondulation longitudinale permet de relâcher grandement les contraintes de commande d'angles entre les éléments. La motricité étant assurée par ondulation longitudinale, les couples à exercer sont beaucoup plus faibles.

On se réfère maintenant à la figure 2. On oriente chaque élément du véhicule par une base de vecteurs (x,y,z). Le vecteur x est orienté dans la direction longitudinale, dans le sens du déplacement Le vecteur z est orienté dans la direction verticale, vers le haut. L'orientation et le sens du vecteur y sont déterminés de manière à former une base directe. Ce vecteur correspond donc à une direction transverse.

La figure 2 est une vue de profil, c'est à dire dans le plan (x,z), d'un élément. Elle illustre un exemple de réalisation d'ondulations longitudinales. Cet élément comprend une surface ventrale V reposant par endroits sur le sol. Cette surface ventrale V est animée d'un mouvement d'ondulation longitudinale. Le mouvement d'ondulation longitudinale peut être imposé par l'oscillation longitudinale de points de la surface ventrale V, chaque point décrivant une courbe identique à son voisin mais décalée dans le temps. En pratique, des points moteurs p1, p2, p3, p4 permettent de produire ces oscillations, ces points étant fixés à la surface. Dans le plan (x,z), un point moteur donné p2 décrit périodiquement en fonction du temps une courbe par exemple globalement circulaire, plus ou moins aplatie. Cette courbe peut à la limite être un segment de droite suivant x. Un point moteur p3, voisin de p2, décrit une courbe identique, mais de façon décalée dans le temps (en avance ou en retard). Les points de la surface fixés à ces points moteurs décrivent les mêmes mouvements que les points moteurs.

Les oscillations de deux points consécutifs p2, p3 étant décalées, la distance d les séparant varie avec le temps. Il en est de même pour les points de la surface V. Pour autoriser ces variations, la surface V peut être formée par une membrane souple (se pliant lorsque d diminue) ou par une membrane élastique (se rétractant lorsque d diminue). La distance d peut être de l'ordre de 3 à 4 cm en moyenne par exemple.

On constate que ces ondulations longitudinales font intervenir de nombreux paramètres de réglage (déphasage entre les points, mouvements des points de la surface ventrale).

Si les points moteurs décrivent un segment de droite (aplatissement extrême), c'est à dire ont un mouvement purement longitudinal, on peut prendre par exemple une phase de 180° entre deux points successifs : périodiquement, les points se rapprochent puis s'écartent suivant la direction longitudinale. Dans ce cas, on obtient une propulsion si les points de la surface voisins des points moteurs glissent facilement dans le sens x positif, et ne glissent pas ou peu dans l'autre sens. C'est le cas typiquement si la surface V est recouverte d'écailles ou d'une peau de phoque. En d'autres termes, la surface ventrale V adhère davantage dans le sens favorable au déplacement que dans l'autre sens.

Si les points moteurs décrivent des cercles, on peut prendre par exemple une phase de 180° entre deux points successifs. Si la surface ventrale V est fixée à au moins quatre points moteurs, la propulsion peut être obtenue sans recours à une adhérence directive, et ce grâce aux mouvements verticaux (projection du cercle suivant z). En d'autres termes, pour chaque point de la surface ventrale V oscillant longitudinalement, on impose en outre un mouvement vertical de même période que les oscillations longitudinales, de sorte à lever ledit point lorsque celui-ci se déplace dans un sens s2, s4 non favorable à la propulsion, et de sorte à baisser ledit point lorsque celui-ci se déplace dans un sens s1, s3 favorable à la propulsion.

En fonction de la nature de la membrane ventrale utilisée et suivant l'état de la surface du sol, un bon compromis entre ces deux mouvements doit être trouvé. Il est donc souhaitable de trouver une réalisation mécanique de ce mouvement qui permette de régler facilement les différents paramètres de l'ondulation longitudinale, et qui présente un rendement mécanique convenable.

On présente dans la suite de la description des exemples de réalisation avantageux de dispositifs mécaniques permettant d'obtenir une ondulation longitudinale, ces dispositifs équipant chaque élément de façon mécaniquement indépendante des autres éléments. Bien entendu, ces exemples sont non limitatifs.

On utilise avantageusement des moteurs électriques à courant continu associés à des réducteurs mécaniques pour mouvoir les points moteurs. Ceci a pour avantage notamment de constituer une technologie éprouvée et faible coût.

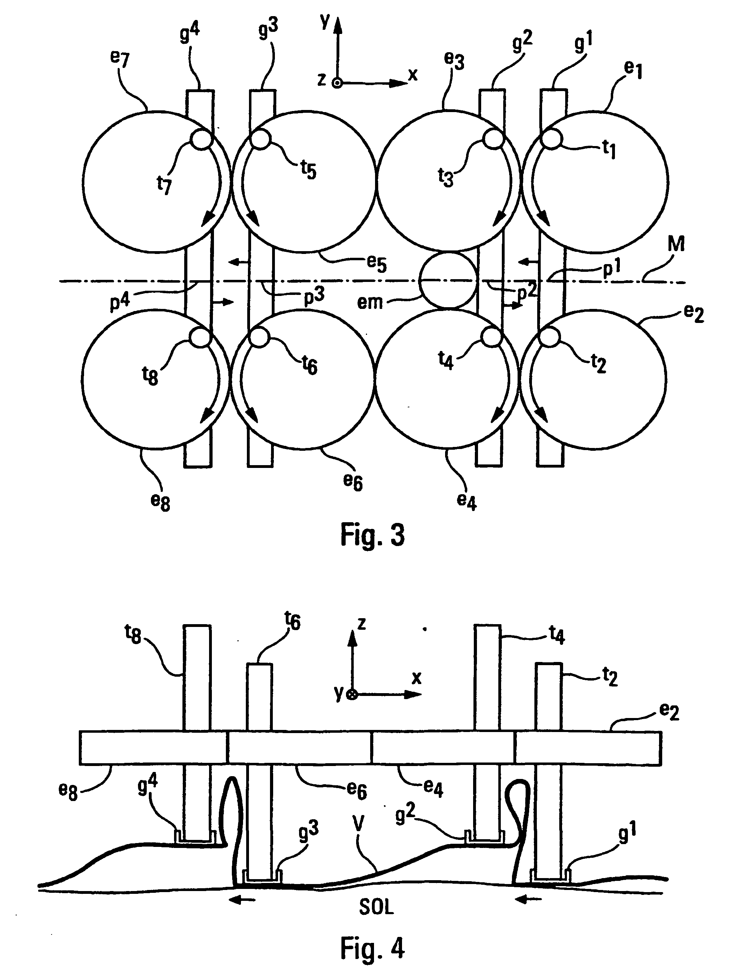

On se réfère maintenant aux figures 3 et 4 qui représentent un exemple de dispositif mécanique à base d'engrenages. La figure 3 est une vue dans le plan (x,y), c'est à dire une vue de dessus. La figure 4 est une vue dans le plan (x,z), c'est à dire une vue de profil. Ce dispositif mécanique permet d'obtenir le mouvement d'ondulation longitudinale illustré sur la figure 2.

Un engrenage moteur em d'axe vertical entraîne des engrenages secondaires e1 à e8 d'axes verticaux. Ces engrenages secondaires sont répartis de part et d'autre d'un axe médian M (voir figure 3). Ils ont le même rayon. L'engrenage moteur em est centré sur l'axe médian M. Les engrenages secondaires e1, e3, e5, e7 sont placés en regard des engrenages e2, e4, e6, e8 respectivement L'engrenage moteur em transmet un mouvement de rotation aux engrenages e3 et e4, qui tournent donc dans le même sens. Ces engrenages e3 et e4 transmettent respectivement ce mouvement aux engrenages e1 et e2 d'une part, et aux engrenages e5 et e6 d'autre part. Les engrenages e5 et e6 transmettent à leur tour ce mouvement aux engrenages e7 et e8 respectivement. Les engrenages e1, e2, e5 et e6 tournent donc dans le même sens. Les engrenages e3, e5, e7 et e8 tournent dans l'autre sens.

Des tiges verticales t1 à t8 traversent respectivement les engrenages e1 à e8. Ces tiges sont entraînées en rotation par les engrenages. Elles décrivent donc des trajectoires circulaires dans le plan horizontal (x,y). Ces tiges sont disposées de la même façon de part et d'autre de l'axe médian M. Ainsi par exemple les tiges t1 et t2 tournent en phase.

Des gouttières p1 à p4 sont placées sous les engrenages e1 à e8, suivant la direction y, c'est à dire transversalement. Le bas des tiges t1 et t2 est en contact avec la gouttière g1. Les tiges t1 et t2 glissent dans la gouttière g1 suivant direction y, et la pousse suivant la direction x. Ainsi, le mouvement circulaire dans le plan (x,y) des tiges t1 et t2 est transformé en un mouvement rectiligne de la gouttière g1 suivant la direction x. En d'autres termes, les tiges t1 et t2 guident la gouttière g1 suivant direction x produisant ainsi un mouvement d'oscillations longitudinales. De même les tiges t3 et t4 guident la gouttière g2, les tiges t5 et t6 guident la gouttière g3, les tiges t7 et t8 guident la gouttière g4.

Ces gouttières g1 à g4 sont fixées à la surface V. On obtient ainsi les ondulations longitudinales de cette surface. Ces gouttières forment des lignes motrices (lignes dans la direction y), donc a fortiori des points moteurs (une ligne étant formée de points). Les points moteurs p1 à p4 représentés sur la figure 2 peuvent être les points milieu des gouttières g1 à g4 respectivement, c'est à dire situés sur l'axe médian M.

Le fait que deux engrenages placés en regard (par exemple e1 et e2) tournent dans le même sens entraîne une force latérale sur la gouttière (par exemple p1) associée. Si le glissement des tiges dans la gouttière n'est pas parfait, ceci entraîne une force latérale sur la gouttière. Les gouttières peuvent être contraintes latéralement (non représenté) par exemple par la surface ventrale V ou une enveloppe externe. Selon une variante de réalisation, les engrenages placés en regard peuvent tourner en sens inverse pour compenser mutuellement la force d'entraînement latérale.

Ce dispositif mécanique a pour principaux avantages d'être efficace et peu encombrant dans le plan vertical. Ceci permet d'emporter une grande charge utile. En outre tous les engrenages e1 à e8 participent directement au mouvement des tiges, donc des gouttières. Le fait que ceux-ci tournent en sens opposés n'empêche pas de les utiliser tous.

On se réfère à la figure 4. Il est possible en outre d'appliquer un mouvement vertical aux points moteurs, c'est à dire aux gouttières g1 à g4. A cet effet, on peut par exemple faire coulisser verticalement les tiges t1 à t8 dans les engrenages, ces tiges entraînant alors verticalement les gouttières.

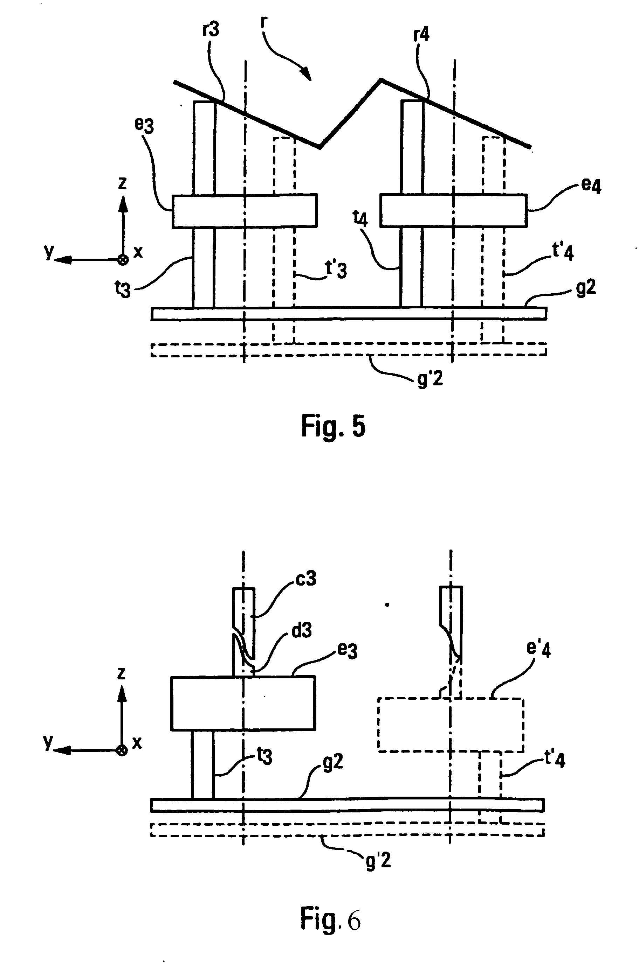

On se réfère maintenant à la figure 5 sur laquelle est illustré un exemple de dispositif permettant de guider verticalement ces tiges. Ces tiges peuvent être guidées verticalement par des surfaces indinées placées au-dessus des tiges. Les tiges glissent dans le plan (x,y) sur ces surfaces. Ainsi par exemple, les tiges t3 et t4 sont guidées par des surfaces inclinées r3 et r4. Dans une position correspondant par exemple à une demi-rotation des engrenages e3 et e4, les tiges t3 et t4 se trouvent à de nouvelles positions t'3 et t'4 respectivement. Pour arriver à ces positions t'3 et t'4, les tiges se sont déplacées dans le plan (x,y) en décrivant un demi-cercle. Dans leurs nouvelles positions t'3 et t'4, les points de contact entre les tiges et les surfaces r3 et r4 sont plus bas. Les tiges coulissent donc vers le bas. Elles entraînent alors la gouttière g2 dans une nouvelle position g'2 plus basse.

En jouant sur l'inclinaison de ces surfaces, on peut augmenter ou diminuer l'amplitude des oscillations verticales. Ces surfaces peuvent aussi former un toit r fixe, l'amplitude des oscillations verticales n'étant alors plus réglable.

On se réfère maintenant à la figure 6 sur laquelle est illustrée une variante de réalisation du dispositif permettant d'appliquer un mouvement vertical. Les tiges sont fixées aux engrenages de manière à les interdire de coulisser verticalement. Ce sont les engrenages e1 à e8 qui se déplacent verticalement, entraînant ainsi les tiges verticalement, lesquelles entraînent les gouttières. A cet effet, les axes de rotation des engrenages e1 à e8 peuvent être équipés de cames. Par exemple l'axe de rotation de l'engrenage e3 peut être équipé d'une came c3, d3. Une partie d3 de cette came est reliée à l'engrenage e3. L'autre partie c3 de cette came est fixe verticalement. L'engrenage e4 n'est pas représenté sur la figure 6. On a représenté une autre position e'4 de cet engrenage correspondant à un autre moment. Dans cette autre position e'4, cet engrenage est dans une position plus basse. La tige t4 (non représentée) se trouve dans une position t'4 plus basse, ce qui amène la gouttière g2 dans une nouvelle position g'2 plus basse.

Ce dispositif mécanique a pour avantage d'être plus simple à réaliser tout en présentant une efficacité équivalente. Par contre il nécessite l'emploi d'engrenages suffisamment haut pour leurs permettre de rester en contact malgré des mouvements verticaux décalés.

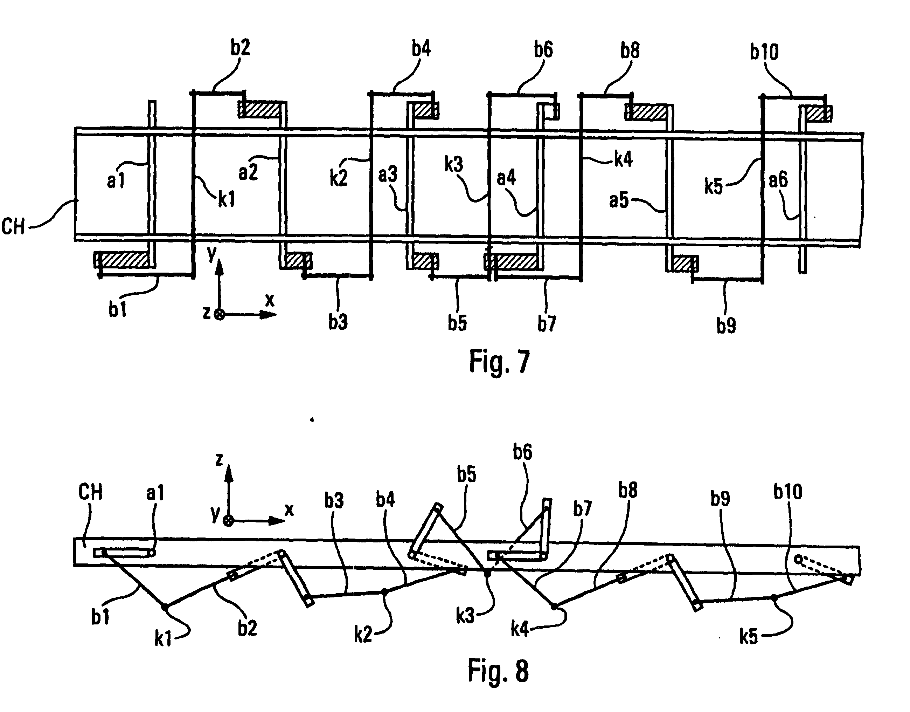

On se réfère maintenant aux figures 7 et 8 qui représentent un exemple de dispositif mécanique à base de biellettes. La figure 7 est une vue dans le plan (x,y), c'est à dire une vue de dessus. La figure 8 est une vue dans le plan (x,z), c'est à dire une vue de profil. Ce dispositif mécanique permet d'obtenir le mouvement d'ondulation longitudinale illustré sur la figure 2.

La propulsion par rapport au sol est assurée par des tiges horizontales k1 à k5 perpendiculaires à l'axe d'un châssis CH. En d'autres termes, les tiges horizontales k1 à k5 orientées suivant la direction y. Ces tiges horizontales agissent sur la surface V de la même manière que les gouttières du dispositif mécanique à base d'engrenages décrit ci-dessus. Les tiges k1 à k5 décrivent des cylindres horizontaux plus ou moins aplatis. En d'autres termes, les points (points moteurs) des tiges k1 à k5 décrivent des cercles plus ou moins aplatis.

Les tiges k1 à k5 sont guidées par des biellettes b1 à b10. Ces biellettes sont situées de part et d'autre du châssis CH. Les biellettes b1, b3, b5, b7, b9 sont situées d'un côté du châssis CH, les autres biellettes b2, b4, b6, b8, b10 sont situées de l'autre côté. Chaque tige horizontale k1 à k5 est reliée à deux biellettes, à raison d'une biellette de chaque côté. Ainsi la tige k1 est reliée aux biellettes b1 et b2, la tige k2 est reliée aux biellettes b3 et b4, la tige k3 est reliée aux biellettes b5 et b6, la tige k4 est reliée au biellettes b7 et b8, la tige k5 est reliée aux biellettes b9 et b10. Les biellettes de gauche et de droite guidant une même tige sont donc décalées d'un rang.

Les extrémités libres (non reliées aux tiges k1 à k5) des biellettes b1 à b10 sont entraînées par un mouvement de rotation synchronisé autour d'axes a1, a2, a3, a4, a5 tournant à la même vitesse. L'axe a1 entraîne l'extrémité libre de la biellette b1. L'axe a2 entraîne l'extrémité libre des biellettes b2 et b3. L'axe a3 entraîne l'extrémité libre des biellettes b4 et b5. L'axe a4 entraîne l'extrémité libre des biellettes b6 et b7. L'axe a5 entraîne l'extrémité libre des biellettes b8 et b9. L'axe a6 entraîne l'extrémité libre de la biellette b10. Les axes a1 à a5 sont transverses (horizontaux et perpendiculaires à l'axe du châssis CH), c'est à dire suivant la direction y. Les axes a1 à a5 peuvent être entraînés par un système d'entraînement tel qu'un système d'engrenages, des chaînes ou des courroies crantées non représenté.

Il est possible de régler la périodicité spatiale (au sol) de l'ondulation longitudinale en jouant sur le déphasage entre les biellettes situées d'un même côté du châssis CH, c'est à dire entre les biellettes b1, b3, b5, b7 et b9 d'une part, et entre les biellettes b2, b4, b6, b8, b10 d'autre part.

Il est possible de régler l'aplatissement des cylindres décrit par les tiges k1 à k5 en jouant sur le déphasage entre biellettes de gauche et de droite (b1 par rapport à b2, b3 par rapport à b4, etc...). Si le déphasage est nul, les points de ces tiges décrivent des cercles. Si le déphasage est de 10° ou 20° par exemple, les points de ces tiges décrivent des cercles aplatis.

Un tel système a pour principaux avantages qu'il est compact, et de réglage facile. Il est possible notamment de régler un tel système en marche en jouant sur le déphasage entre côtés droit et gauche pour aplatir les cylindres décrits par les tiges. Ceci permet d'adapter l'ondulation à la nature du terrain.

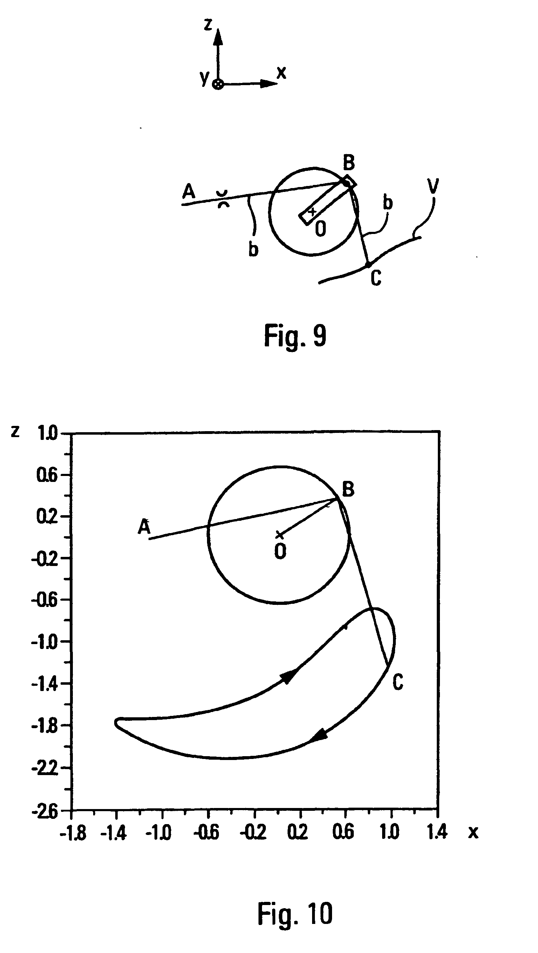

On se réfère maintenant aux figures 9 et 10 qui représentent un exemple de dispositif mécanique à base de jambes coulissantes. La figure 9 est une vue dans le plan (x,z), c'est à dire une vue de profil, d'une jambe coulissante. La figure 10 est un graphique représentant les trajectoires de deux points d'une jambe coulissante dans le plan (x,z).

Le dispositif mécanique comprend plusieurs jambes de propulsion. Chaque jambe de propulsion b a une forme de segment brisé faisant un angle constant. Les extrémités A et C de la jambe b sont reliées respectivement à un guide coulissant (en A) et à une tige horizontale (en C). La tige horizontale est suivant la direction y. Elle est fixée sur la surface ventrale V.

Le point de la jambe faisant un angle, référencé par B, est entraîné dans le plan (x,z), c'est à dire le plan vertical, par un mouvement de rotation d'axe O. En d'autres termes, l'axe O est un axe moteur entraînant en rotation le point B de la jambe b. Le mouvement décrit par le point C dépend des longueurs AB, BC, de la distance OB, et de l'angle (AB, BC).

Un exemple de courbe décrite par le point C est illustré sur la figure 10. Le point B décrit un cercle. Le point C oscille longitudinalement et verticalement à la même période. Le point C s'abaissent lorsqu'il se déplace dans le sens x négatif (sens favorable à la propulsion), et se relève lorsqu'il se déplace dans le sens x positif (sens non favorable à la propulsion).

Bien entendu, le dispositif complet comprend plusieurs jambes coulissantes entraînées en rotation par plusieurs axes moteurs. Ces axes moteurs (tel que O) peuvent être reliés par un système d'entraînement central tel qu'une courroie par exemple. Ces jambes peuvent être alignées selon un axe central longitudinal par exemple, ce qui diffère du système à base de biellettes dans lequel lesdites biellettes sont réparties à gauche et à droite.

Comme pour le dispositif précédent, la périodicité spatiale (au sol) de l'ondulation peut être réglée en jouant sur le déphasage de rotation entre les axes moteurs successifs.

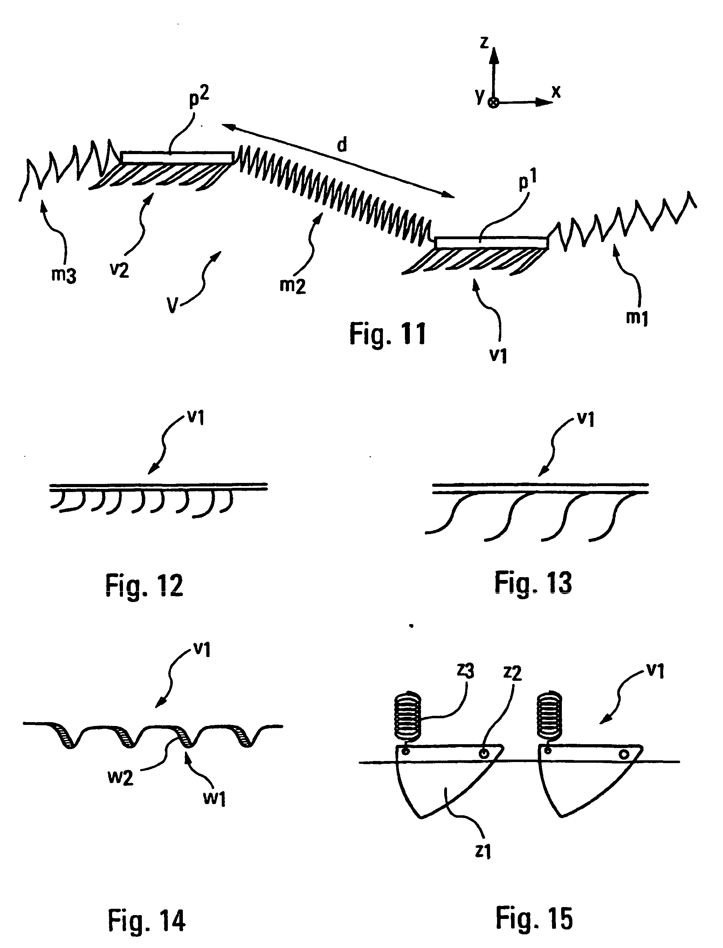

On se réfère maintenant à la figure 11 qui représente une vue de profil de la surface ventrale V. Cette surface ventrale peut être recouverte par une membrane souple (illustrée par ailleurs sur la figure 4) ou une membrane élastique (illustrée par ailleurs sur la figure 2). Cette membrane peut donc se déformer en se pliant (membrane souple) ou en se contractant et en se rétractant (membrane élastique). Cette membrane assure par ailleurs l'étanchéité du véhicule et l'adhérence par rapport au sol.

A cet effet, cette membrane peut être formée par des parties v1, v2 adhérentes d'une part et par des parties souples ou élastiques m1, m2 d'autre part. Les parties adhérentes v1, v2 sont placées en regard des points moteurs p1; p2. Ces parties adhérentes peuvent être recouvertes d'écailles par exemples, favorisant l'adhérence dans le sens favorable au déplacement du véhicule. Bien entendu, ces parties adhérentes v1, v2 sont aussi étanches. Les parties souples ou élastiques m1, m2 permettent de faire une jonction étanche entre les parties adhérentes. Les parties souples ou élastiques m1, m2 de cette membrane peuvent par exemple être formée par une membrane souple plastifiée du type présentant des plis tel une membrane d'accordéon ou un tuyau d'aspirateur.

On se réfère maintenant aux figures 12 à 15. Ces figures illustrent des variantes de réalisation des parties adhérentes v1, v2 de la surface ventrale V. Conformément au mode de réalisation illustré sur la figure 12, la partie adhérente v1 est recouverte de griffes. Ces griffes sont orientées de manière à présenter une adhérence longitudinale directive.

Conformément au mode de réalisation illustré sur la figure 13, la partie adhérente v1 est recouverte de lames inclinées. Ces lames ont un profil présentant une partie supérieure en avant, servant leur fixation sur la partie v1, et une partie inférieure en arrière, servant à s'accrocher aux aspérités du sol. Ces lames glissent longitudinalement dans un sens et accrochent dans l'autre.

Conformément au mode de réalisation illustré sur la figure 14, la partie adhérente v1 est recouverte de plots w1, sur lesquels sont placés des surfaces caoutchoutées (adhérentes) en retrait Ces plots caoutchoutés sont particulièrement adaptés aux terrains secs.

Conformément au mode de réalisation illustré sur la figure 15, la surface v1 est recouverte de lames de couteau verticales z1, orientées longitudinalement, et articulées autour d'un axe de rotation transverse z2. L'axe de rotation z2 est à l'avant de la lame. Un ressort z3 peut agir à l'arrière de cette lame pour maintenir un contact avec le sol. Ceci permet d'obtenir à la fois une adhérence latérale, utile pour les mouvements de d'ondulation latérale, et une adhérence directive longitudinale, utile pour les mouvements d'ondulation longitudinale.

La propulsion par ondulation longitudinale enseignée ci-dessus ne contrarie pas le mouvement latéral. Elle ajoute une force de propulsion complémentaire. Avantageusement, la vitesse de propulsion longitudinale est la même sur tous les éléments. Elle peut être déterminée globalement en accord avec cette résultant de l'ondulation latérale.

Il n'est pas nécessaire de prévoir de système d'asservissement sur la commande de propulsion longitudinale, si par ailleurs comme décrit dans le brevet FR 2 741 584 un asservissement est prévu pour la commande des angles entre segments.

Avantageusement, une membrane de type tuyau d'aspirateur peut recouvrir la liaison entre les ensembles consécutifs. Cette membrane assure une bonne résistance mécanique et une continuité de forme.

Quoi qu'il en soit, pour être particulièrement avantageux, les modes de réalisation particuliers décrits n'en sont pas moins non limitatif, et diverses variantes, concernant notamment les détails qui ont été indiqués en exemples, resteront dans le cadre de l'invention objet du brevet

Par exemple, d'autres systèmes de motorisation, notamment hydraulique ou pneumatique, peuvent remplacer systèmes donnés à titre d'exemple.

## Revendications

1. Procédé de propulsion d'un véhicule à déplacement par reptation, essentiellement constitué par une série d'éléments (A,B) articulés entre eux, dans lequel on impose à chaque élément (B) une orientation variant au cours du temps de manière à suivre le trajet de l'élément précédent (A), de sorte à donner à l'ensemble du véhicule un trajet sinueux (TR) à ondulations latérales, **caractérisé en ce qu'**on impose aussi un mouvement d'ondulation longitudinale à la surface ventrale (V) d'au moins un élément, de sorte à produire une force propulsive complémentaire de celle résultant du mouvement d'ondulation latérale.

2. Procédé selon la revendication 1, **caractérisé en ce que** le mouvement d'ondulation longitudinale est imposé de sorte que la vitesse de propulsion résultant de ce mouvement soit en accord avec celle résultant du mouvement d'ondulation latérale.

3. Procédé selon l'une quelconque des revendications précédentes, **caractérisé en ce que** le mouvement d'ondulation longitudinale est imposé par l'oscillation longitudinale de points de la surface ventrale, chaque point décrivant une courbe identique-à son voisin mais décalée dans le temps.

4. Procédé selon la revendication 3, **caractérisé en ce que** pour chaque point de la surface ventrale oscillant longitudinalement, on impose en outre un mouvement vertical de même période que les oscillations longitudinales, de sorte à lever ledit point lorsque celui-ci se déplace dans un sens (s2, s4) non favorable à la propulsion, et de sorte à baisser ledit point lorsque celui-ci se déplace dans un sens (s1, s3) favorable à la propulsion.

5. Procédé selon l'une quelconque des revendications précédentes, **caractérisé en ce que** lors du mouvement d'ondulation longitudinale, la surface ventrale d'au moins un élément adhère davantage dans le sens favorable au déplacement que dans l'autre sens.

6. Véhicule à déplacement par reptation, essentiellement constitué par une série d'éléments articulés entre eux par des moyens d'articulation, tel qu'en vue de sa propulsion par mise en oeuvre du procédé suivant l'une quelconque des revendications 1 à 5, il comprend :
(a)des premiers moyens de commande, agissant notamment sur les moyens d'articulation, tendant à imposer à chaque élément une orientation variant au cours du temps, cette orientation variant de manière à suivre le trajet de l'élément précédent, de sorte à donner à l'ensemble du véhicule un trajet sinueux à ondulations latérales ;
**caractérisé en ce qu'**il comprend en outre :
(b)des seconds moyens de commande, agissant notamment sur la surface ventrale d'au moins un élément, tendant à imposer à ladite surface un mouvement d'ondulation longitudinale, de sorte à produire une force propulsive complémentaire de celle résultant du mouvement d'ondulation latérale.

7. Véhicule selon la revendication 6, **caractérisé en ce que** les seconds moyens de commande sont réglés de sorte que la vitesse de propulsion résultant du mouvement d'ondulation longitudinale soit en accord avec celle résultant du mouvement d'ondulation latérale.

8. Véhicule selon l'une quelconque des revendications 6 à 7, **caractérisé en ce que** les seconds moyens de commande agissent sur la surface ventrale en imposant une oscillation longitudinale à des points de la surface ventrale, chaque point décrivant une courbe identique à son voisin mais décalée dans le temps.

9. Véhicule selon la revendication 8, **caractérisé en ce que** les seconds moyens de commande agissent sur la surface ventrale en imposant en outre à chaque point de la surface ventrale un mouvement vertical de même période que les oscillations longitudinales, de sorte à lever ledit point lorsque celui-ci se déplace dans un sens non favorable à la propulsion, et de sorte à baisser ledit point lorsque celui-ci se déplace dans un sens favorable à la propulsion.

10. Véhicule selon l'une quelconque des revendications 6 à 9, **caractérisé en ce qu'**au moins une surface ventrale animée d'un mouvement d'ondulation longitudinale présente une adhérence directive, supérieure dans le sens favorable au déplacement que dans l'autre sens.

## Patentansprüche

1. Verfahren für den Antrieb eines Fahrzeugs mit schlängelnder Fortbewegung, das hauptsächlich aus einer Reihe von aneinander angelenkten Elementen (A, B) besteht, wobei jedem Element (B) eine zeitlich derart variierende Ausrichtung aufgezwungen wird, dass es der Bahn des vorhergehenden Elements (A) folgt, um der Gesamtheit des Fahrzeugs eine gewundene Bahn (TR) mit seitlichen Wellenlinien zu verleihen, **dadurch gekennzeichnet, dass** der Bauchfläche (V) mindestens eines Elements auch eine Längswellenbewegung aufgezwungen wird, um eine Antriebskraft zu erzeugen, die zu derjenigen komplementär ist, die aus der seitlichen Wellenbewegung entsteht.

2. Verfahren nach Anspruch 1, **dadurch gekennzeichnet, dass** die Längswellenbewegung so aufgezwungen wird, dass die aus dieser Bewegung entstehende Antriebsgeschwindigkeit mit derjenigen übereinstimmt, die aus der seitlichen Wellenbewegung entsteht.

3. Verfahren nach einem der vorhergehenden Ansprüche, **dadurch gekennzeichnet, dass** die Längswellenbewegung durch die Längsschwingung von Punkten der Bauchfläche aufgezwungen wird, wobei jeder Punkt eine zu derjenigen seines Nachbarn identische, aber zeitlich verschobene Kurve beschreibt.

4. Verfahren nach Anspruch 3, **dadurch gekennzeichnet, dass** jedem in Längsrichtung schwingenden Punkt der Bauchfläche außerdem eine senkrechte Bewegung mit gleicher Periode wie die Längsschwingungen aufgezwungen wird, um den Punkt anzuheben, wenn er sich in einer für den Antrieb ungünstigen Richtung (s2, s4) fortbewegt, und um den Punkt zu senken, wenn er sich in einer für den Antrieb günstigen Richtung (s1, s3) fortbewegt.

5. Verfahren nach einem der vorhergehenden Ansprüche, **dadurch gekennzeichnet, dass** die Bauchfläche mindestens eines Elements bei der Längswellenbewegung in der für die Fortbewegung günstigen Richtung stärker haftet als in der anderen Richtung.

6. Fahrzeug mit schlängelnder Fortbewegung, das hauptsächlich aus einer Reihe von mittels Anlenkmitteln aneinander angelenkten Elementen besteht, derart, dass es für seinen Antrieb durch Anwendung des Verfahrens nach einem der Ansprüche 1 bis 5 aufweist:
(a)erste Steuermittel, die insbesondere auf die Anlenkmittel wirken und dazu tendieren, jedem Element eine zeitlich variierende Ausrichtung aufzuzwingen, wobei diese Ausrichtung so variiert, dass sie der Bahn des vorhergehenden Elements folgt, um der Gesamtheit des Fahrzeugs eine schlängelnde Bahn mit seitlichen Wellenlinien zu verleihen;
**dadurch gekennzeichnet, dass** es weiter aufweist:
(b)zweite Steuermittel, die insbesondere auf die Bauchfläche mindestens eines Elements einwirken und dazu tendieren, der Fläche eine Längswellenbewegung aufzuzwingen, um eine Antriebskraft zu erzeugen, die zu derjenigen komplementär ist, die aus der seitlichen Wellenbewegung entsteht.

7. Fahrzeug nach Anspruch 6, **dadurch gekennzeichnet, dass** die zweiten Steuermittel so geregelt sind, dass die aus der Längswellenbewegung entstehende Antriebsgeschwindigkeit mit derjenigen übereinstimmt, die aus der seitlichen Wellenbewegung entsteht.

8. Fahrzeug nach einem der Ansprüche 6 bis 7, **dadurch gekennzeichnet, dass** die zweiten Steuermittel auf die Bauchfläche einwirken, indem sie Punkten der Bauchfläche eine Längswellenlinie aufzwingen, wobei jeder Punkt eine derjenigen seines Nachbarn identische, aber zeitlich verschobene Kurve beschreibt.

9. Fahrzeug nach Anspruch 8, **dadurch gekennzeichnet, dass** die zweiten Steuermittel auf die Bauchfläche einwirken, indem sie außerdem jedem Punkt der Bauchfläche eine senkrechte Bewegung mit gleicher Periode wie die Längsschwingungen aufzwingen, um den Punkt anzuheben, wenn er sich in einer für den Antrieb ungünstigen Richtung fortbewegt, und um den Punkt zu senken, wenn er sich in einer für den Antrieb günstigen Richtung fortbewegt.

10. Fahrzeug nach einem der Ansprüche 6 bis 9, **dadurch gekennzeichnet, dass** mindestens eine in eine Längswellenbewegung versetzte Bauchfläche eine Richtungshaftung aufweist, die in der für die Bewegung günstigen Richtung stärker ist als in der anderen Richtung.

## Claims

1. Method for the propulsion of a vehicle moving by reptation, essentially constituted by a series of mutually articulated elements (A,B), in which an orientation is imposed on each element (B) that varies over time so as to follow the path of the preceding element (A), in such a way as to make the overall vehicle follow a sinuous path (TR) with lateral undulations, **characterized in that** a longitudinal undulation motion is also imposed on the ventral surface (V) of at least one element, so as to produce a propulsive force complementary to the force resulting from the lateral undulation motion.

2. Method according to Claim 1, **characterized in that** the longitudinal undulation motion is imposed so that the propulsion speed resulting from this motion matches the speed resulting from the lateral undulation motion.

3. Method according to either of the preceding claims, **characterized in that** the longitudinal undulation motion is imposed by the longitudinal oscillation of points on the ventral surface, each point describing a curve that is identical to that of its neighbour but is offset in time.

4. Method according to Claim 3, **characterized in that**, for each longitudinally oscillating point on the ventral surface, a vertical motion having the same period as the longitudinal oscillations is furthermore imposed so as to lift up said point when it moves in a direction (s2, s4) not favourable to propulsion, and so as to lower said point when it moves in a direction (s1, s3) favourable to propulsion.

5. Method according to any one of the preceding claims, **characterized in that**, during the longitudinal undulation motion, the ventral surface of at least one element adheres more strongly in the direction favourable to displacement than in the other direction.

6. Vehicle moving by reptation, essentially consisting of a series of elements mutually articulated by articulation means, the vehicle being such that, for the purpose of its propulsion by implementing the method according to any one of Claims 1 to 5, it comprises:
(a) first control means, acting especially on the articulation means, tending to impose an orientation that varies over time on each element, this orientation varying so as to follow the path of the preceding element, in such a way as to make the overall vehicle follow a sinuous path with lateral undulations;
**characterized in that** it furthermore comprises:
(b) second control means acting especially on the ventral surface of at least one element, tending to impose a longitudinal undulation motion on said surface, so as to produce a propulsive force complementary to the force resulting from the lateral undulation motion.

7. Vehicle according to Claim 6, **characterized in that** the second control means are set so that the propulsion speed resulting from the longitudinal undulation motion matches the speed resulting from the lateral undulation motion.

8. Vehicle according to either of the Claims 6 and 7, **characterized in that** the second control means act on the ventral surface by imposing a longitudinal oscillation at points on the ventral surface, each point describing a curve that is identical to that of its neighbour but is offset in time.

9. Vehicle according to Claim 8, **characterized in that** the second control means act on the ventral surface by furthermore imposing a vertical motion at each point on the ventral surface, this vertical motion having the same period as the longitudinal oscillations, so as to lift up said point when it moves in a direction not favourable to propulsion, and so as to lower said point when it moves in a direction favourable to propulsion.

10. Vehicle according to any one of Claims 6 to 9, **characterized in that** at least one ventral surface set a longitudinal undulation motion exhibits directional adhesion, this being stronger in the direction favourable to displacement than in the other direction.
